# EUROPEAN PATENT SPECIFICATION

(11) **EP 1 144 222 B1**
(45) Date of publication and mention of the grant of the patent: **29.09.2004**
(21) Application number: 99967657.0
(22) Date of filing: 28.12.1999
(51) Int. Cl.: B60R 11/02

(54) **VIDEO DISPLAY SYSTEM FOR A VEHICLE**
VIDEOANZEIGEGERÄT FÜR EIN KRAFTFAHRZEUG
SYSTEME D'AFFICHAGE VIDEO DESTINE A EQUIPER UN VEHICULE

(30) Priority: 28.12.1998 US 113876 P
(43) Date of publication of application: 17.10.2001
(73) Proprietor: Johnson Controls Technology Company, Plymouth, Michigan 48170 (US)
(72) Inventor: MATHIAS, Larry, E., Byron Center, MI 49315 (US); HURLEY, Paul, D., Holland, MI 49424 (US); LEEKA, L., Matthew, Holland, MI 49423 (US)
(74) Representative: Dealtry, Brian
(86) International application number: PCT/US1999/030993
(87) International publication number: WO 2000/038951

(56) References cited:
- WO-A-99/00976
- DE-A- 4 406 872
- US-A- 5 775 762
- US-A- 5 927 784
- PATENT ABSTRACTS OF JAPAN vol. 1998, no. 03, 27 February 1998 (1998-02-27) & JP 09 286283 A (AISIN AW CO LTD), 4 November 1997 (1997-11-04)
- PATENT ABSTRACTS OF JAPAN vol. 1997, no. 02, 28 February 1997 (1997-02-28) & JP 08 282391 A (FUJITSU TEN LTD), 29 October 1996 (1996-10-29)

## Description

### BACKGROUND OF THE INVENTION

### 1. Field of the Invention

The present invention relates generally to a video display system, and, more particularly, to a video display system which is mountable in a vehicle and also removable for use outside the vehicle.

### 2. Discussion of the Related Art

Televisions and video cassette players have recently become quite popular in motor vehicles as a means of providing entertainment for both children and adults. Such devices, for the most part, however, have been limited to use in larger vehicles such as sport utility vehicles, mini-vans, and full size vans due to the space requirements for conventional televisions and video cassette players. Such systems have often been mounted in a console on the floor of a vehicle, as well as to the headliner of a vehicle. In either mounting, such systems require a significant amount of space. Also, such systems have typically not been removable easily from the vehicle for use outside the vehicle with an AC power source.

More recently advances in Liquid Crystal Display (LCD) panels have significantly improved the picture and contrast afforded by these types of displays, making them suitable for use in a wide variety of applications. LCDs are much thinner than conventional cathode ray tubes (CRTs) and therefore require significantly less space than a conventional television employing a CRT as a picture tube. LCDs are also much lighter in weight than CRTs, therefore making them readily portable, as evidence by the popularity of laptop computers. The lightweight and compact configuration of an LCD panel would therefore enable it to easily be mounted in various interior areas of a motor vehicle such as a sport utility vehicle, truck, van, or car, where the mounting of a video screen having a CRT would not be possible because of space constraints.

Even more recently, Digital Video Disc (DVD) players have become increasingly popular. DVD players are significantly more compact than video cassette players, lighter in weight, generate less heat and offer significantly enhanced picture and sound quality over a VHS format videocassette. The extremely compact dimension of a DVD, which is essentially the same as a compact disc, further enables the dimensions of the DVD player to be kept very compact. DVD players are not limited to playing video discs, but can also play compact discs as well.

In view of the foregoing performance and compact size advantages offered by LCD panels and DVD players, it would be highly desirable to incorporate both such devices into an integrated LCD/DVD unit which could be easily mounted within a motor vehicle such as a car, sport utility vehicle, van, mini-van, or truck. More preferably, it would be highly desirable to incorporate an integrated LCD/DVD unit into a console in such a manner that the LCD/DVD unit can be quickly and easily moved into a viewable position, such as flipped down from a headliner mounted console, and also easily moved into a stowed position so that it is out of the way when not in use.

It would further be highly desirable to provide an LCD/DVD player which can be quickly and easily removed from its associated console so that the entire unit can be used outside of the vehicle with an alternate AC or DC power source.

US 5,775,762 discloses a video display system according to the preamble of claim 1 for a motor vehicle, boat or aircraft. The console includes an elongated console housing having a leading end a trailing end, a monitor mounted in the leading end of the console housing and a compartment for storing a source of video signals.

JP 9-286283 discloses an electronic equipment assembly installed in a space formed in the instrument panel of a car. The assembly includes a mount unit electrically connected to the car, and an adapter retractably installed in the mount unit and electrically connected to the unit at an optional position.

The assembly also includes an electronic equipment body installed without any attachment or detachment to or from the adpater and electrically connected to the adapter when installed. An operating part is installed in a front panel of the body.

This enables the electronic equipment body to be drawn out a predetermined distance, dependent on the car type, and also enables the operating part to move forward so that it can be operated. This enables the electronic equipment body to be taken out of the mount unit so that it may be used outside of the car.

### SUMMARY OF THE INVENTION

The present invention relates to an integrated visual display/digital media player in the form of an integrated LCD/DVD unit or video display system and a docking member which is movably mounted within a console. The video display system can be used to watch material contained on digital video discs or to play compact discs, provided speakers are coupled to the video display system.

According to the invention there is provided a display system according to claim 1.

In one preferred embodiment, the video includes a housing and a screen console having a screen. The screen console is moveable between a first position and a second position. A digital video disc player is simultaneously integrally positioned within one of the housing and the screen console and operably connected to the screen.

In another preferred embodiment the video display system is releasably coupled to the docking member. The docking member is in turn movably coupled to the console. The console may be mounted at many places within the vehicle, but in the preferred embodiment is mounted to the headliner of the vehicle. A latch on the back of the docking member automatically holds it in a retracted or "stowed" position when the unit is inserted into the docking member and then folded up into the console. Latch assemblies on the video display system releasably secure it to the docking member yet permit the unit to be easily uncoupled from the docking member and removed for use outside of the vehicle.

The present invention requires only a small portion of the space required by a television having a cathode ray tube and a video cassette player. When in the stowed position, the video display system is held within its associated console and forms an unobtrusive system which does not interfere appreciably with the driver's vision out of the rear of the vehicle, when mounted in the headliner. The system, however, is compact enough to readily permit mounting in outer areas, such as the rear of the two front seats or on a floor mounted console.

In addition, the smaller packaging and footprint of the present invention make the video display system easier to incorporate into various styles and types of vehicles.

In addition, the video display system of the present invention can be removed from the docking station which is located in the headliner and placed in another docking station which is located remote from the vehicle. This enables the video display system to be used for entertainment when at a location outside the vehicle. Further, the video display system may also incorporate a television tuner and/or cable adapter so as to allow the video display system to display television programs.

Other objects and advantages of the present invention will become apparent to those skilled in the art upon reading the following detailed description and upon reference to the following drawings.

### BRIEF DESCRIPTION OF THE DRAWINGS

The various advantages of the present invention will become apparent to one skilled in the art upon reading the following specification and by reference to the drawings in which:
FIGURE 1 is a front perspective view of a video display system which is not an embodiment of the invention ;
FIGURE 2 is a rear perspective view of the video display system shown in FIGURE 1;
FIGURE 3 is an exploded view of the video display system shown in FIGURE 1.
FIGURE 4 is a front perspective view of an embodiment made in accordance with the present invention;
FIGURE 5 is an exploded view of the embodiment shown in FIGURE 4 made in accordance with the present invention;
FIGURES 6a and 6b are alternative embodiments of the housing of the embodiment shown in FIGURE 4 made in accordance with the present invention;
FIGURES 7a-7c are side views of the latch mechanism of the embodiment shown in FIGURE 4 made in accordance with the present invention;
FIGURE 8a is a front view of a stand operable with the embodiment shown in FIGURE 4 made in accordance with the present invention;
FIGURE 8b is a side view of the stand shown in FIGURE 8a made in accordance with the present invention;
FIGURE 9 is a front perspective view of a tuner stand operable with the embodiment shown in FIGURE 4 made in accordance with the present invention;
FIGURE 10 is a perspective view of an alternative embodiment of the present invention shown in FIGURE 4 made in accordance with the present invention;
FIGURE 11 is an exploded view of the embodiment shown in FIGURE 10 made in accordance with the present invention;
FIGURE 12 is a front perspective view of the housing of the embodiment shown in FIGURE 10 made in accordance with the present invention;
FIGURE 13 is a perspective view of the embodiment shown in FIGURE 10 made in accordance with the present invention;
FIGURE 14 is a perspective view of the embodiment shown in FIGURE 10 made in accordance with the present invention;
FIGURE 15 is a perspective view of the embodiment shown in FIGURE 10;
FIGURE 16 is a front perspective view of an alternative preferred embodiment made in accordance with the present invention; and
FIGURE 17 is an exploded view of the embodiment shown in FIGURE 4 made in accordance with the present invention.

### DETAILED DESCRIPTION OF THE PREFERRED EMBODIMENTS

The following description of the preferred embodiments is merely exemplary in nature, and are in no way intended to limit the invention or its application or uses. Moreover, while the detailed description discloses a specific vehicle interior trim component embodiment, one skilled in the art will recognize that any vehicle interior trim component could incorporate the present invention.

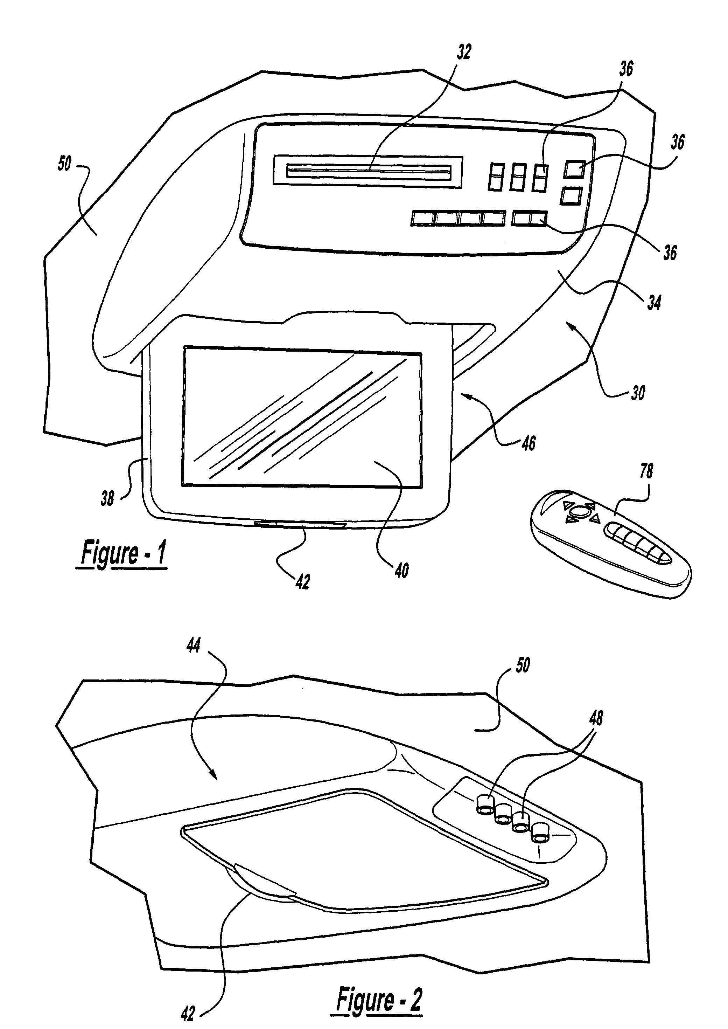

Referring to FIGURES 1 and 2, a video display system 30 is shown. The video display system 30 includes a digital video disc (DVD) player 32 that is integrated in a housing 34. The housing 34 also includes a plurality of controls 36 that allow a user to operate the DVD player 32. A screen console 38 having a screen portion 40 is rotatably mounted to the housing 34. Releasing a latch mechanism 42 allows the screen console 38 to rotate from a first or closed position 44 to a second or open position 46. The latch mechanism 42 is positioned substantially on the screen console 38 engageable with a portion of the housing 34. Alternatively, the latch mechanism 42 can be positioned substantially on the housing 34 engageable with a portion of the screen console 38. A plurality of audio connectors 48 is also integrated with the housing extending from the housing such that a user could connect speakers, headphones, or other conventionally known listening devices to the video display system 30.

Although the video display system 30 is depicted in FIGURES 1 and 2 as being mounted to a headliner of a motor vehicle interior, it will be appreciated by one of ordinary skill in the art that the video display system 30 could be mounted in several areas of a vehicle, including, but not limited to, a seat back, a floor console, a center armrest console, etc. Additionally, the video display system 30 is not limited to automotive applications. The video display system could easily be incorporated into similar components within the cabin of a boat, aircraft, etc.

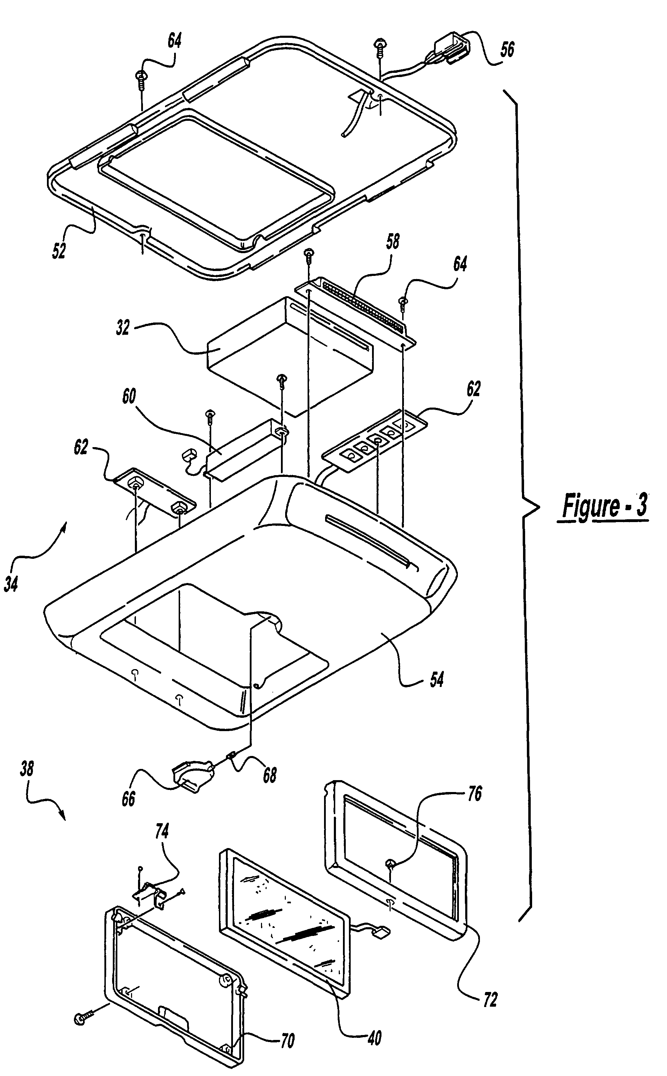

Referring to FIGURE 3, the components of the video display system 30 are shown. The housing 34 includes a retainer portion 52 and a bezel portion 54, with a vehicle interface wiring harness 56 extending through the retainer portion 52 and the bezel portion 54 including a plurality of apertures 55. The plurality of apertures 55 are positioned accordingly on the bezel portion 54 in order to accommodate digital video discs and the plurality of controls 36. Several components are integrated in the bezel portion 54 and the retainer portion 52 of the housing 34. These components include the DVD player 32, a disk wiper assembly 58, and a power supply 60. Additionally, printed circuit boards 62 are integrated into the housing 34 providing, among other things, a user input and output interface with the audio connectors 48 and the plurality of controls 36. Each of the components are fixedly secured within the housing. Threaded fasteners 64 are used for this purpose. However, one of ordinary skill in the art will appreciate that other types of fasteners could be used with equal results and, therefore, are within the scope of this disclosure. Additionally, each component is operatively associated with the other components in any known conventional manner such that the DVD player functions as it is intended and, therefore, is also within the scope of one of ordinary skill in the art.

In FIGURE 3, the first latch mechanism 42 includes a latch portion 66 and a latch spring 68 operatively associated with the bezel portion 54 of the housing 34 in order to retain the screen console 38 in a first or closed position 44. Alternatively, the first latch mechanism 42 could be positioned within the screen console 38 and operatively associated with the housing 34 in order to releasably retain the screen console 38 within the housing 34.

The screen console 38 includes a screen 40, preferably a liquid crystal display, positioned within a rear cover 70 of the screen console and a front cover 72 of the screen console 38. The screen console 38 is moveably associated with the housing 34. In a preferred embodiment, the screen console 38 is rotatably or.pivotally associated with the housing 34 through the use of a torque hinge 74. The torque hinge 74 provides a smooth, constant, and controlled rotation of the screen console 38 from the first or closed position 44 to the second or open position 46 after the latch mechanism 42 is actuated by a user. One of ordinary skill in the art will appreciate that various types of hinge mechanisms can be used with equal results. Additionally, one of ordinary skill in the art will appreciate that the screen console 38 and screen 40 could be movably associated with the housing 34 such that the screen console moved from the first or closed position 44 to the second or open position 46 along an axial path after the latch mechanism 42 had been actuated. This type of movement would include, but is not limited to sliding in an upwardly or downwardly facing direction.

The screen 40 is also operatively associated with the components integrated in the housing 34 such that the DVD player 32 functions as intended in any conventionally known manner. Connecting the screen 40 in this manner is also within the skill of one of ordinary skill in the art. Additionally, conventionally known fasteners 64 are used to attach the torque hinge 74 to the housing 34 and the screen console 38. Conventionally known fasteners 64 are also used to attach the front cover 72 to the rear cover 70 thereby retaining the screen 40 within the screen console 38.

Also positioned on the screen console 38 is an infrared transmitter/receiver 76. Alternatively, the infrared transmitter/receiver 76 could be positioned on the housing 34 with equal results. The infrared transmitter/receiver 76 is operable to receive control signals from a remote control device 78 actuated by the user and operable to send audio signals to remote locations including, but not limited to, infrared headphones and speakers.

In an alternative arrangement, the video display system 30 components can be operably arranged and integrated into the screen console 38 forming a self contained video player unit 79 that is detachable from the housing 34. This alternative preferred embodiment will now be described in greater detail with features corresponding to the features of the above-described embodiment being referenced using the same reference numbers and reference signs.

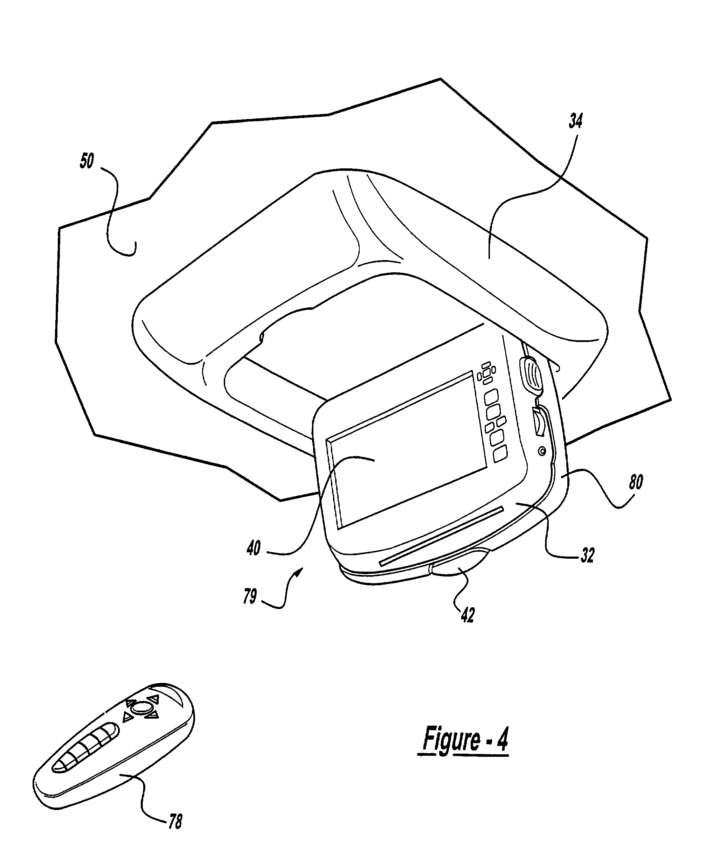

Referring to FIGURE 4, the video display system 30 of a preferred embodiment is shown. The video display system 30 includes a DVD player 32 and a screen 40 integrated in a screen console 38 forming a video player unit 79 releasably attached to a housing panel 80. The housing panel 80 is moveably attached to the housing 34 and is operable to move between a first or closed position 44 and a second or open position 46, as previously described with reference to FIGURES 1 - 3. The housing panel 80 also incorporates a first latch mechanism 42 that releasably retains the screen console 38 and the housing panel 80 in the first or closed position 44 and, when actuated by a user, allows the screen console 38 and the housing panel 80 to be released and moved to the second or open position 46. In this embodiment, the screen 40 is a liquid crystal display.

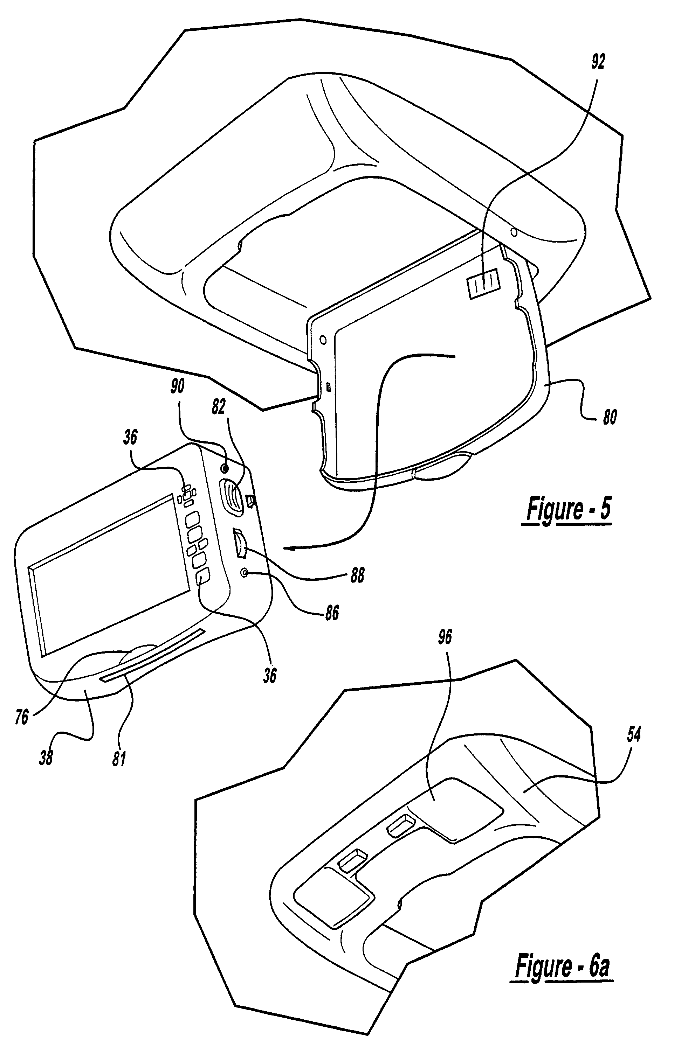

Referring to FIGURE 5, the screen console 38 is shown detached from the housing panel 80. The screen console 38 includes a second latch mechanism 82 operatively associated with the housing panel 80 to releasably connect the screen console 38 to the housing panel 80. In this embodiment, the screen console 38 also includes an infrared transmitter/receiver 76 operable to receive control signals from a remote control device 78 and operable to send audio signals to remote locations including, but not limited to, infrared headphones and speakers. Additionally,. the screen console includes a plurality of controls 36 that allow the user to operate the DVD player and a slot 81 allowing insertion and removal of the digital video disc. The screen console 38 also incorporates an audio connector 86 and a corresponding audio control switch 88. One of ordinary skill in the art will appreciate that the audio connector 86 is operable to receive a connector from headphones or speakers.

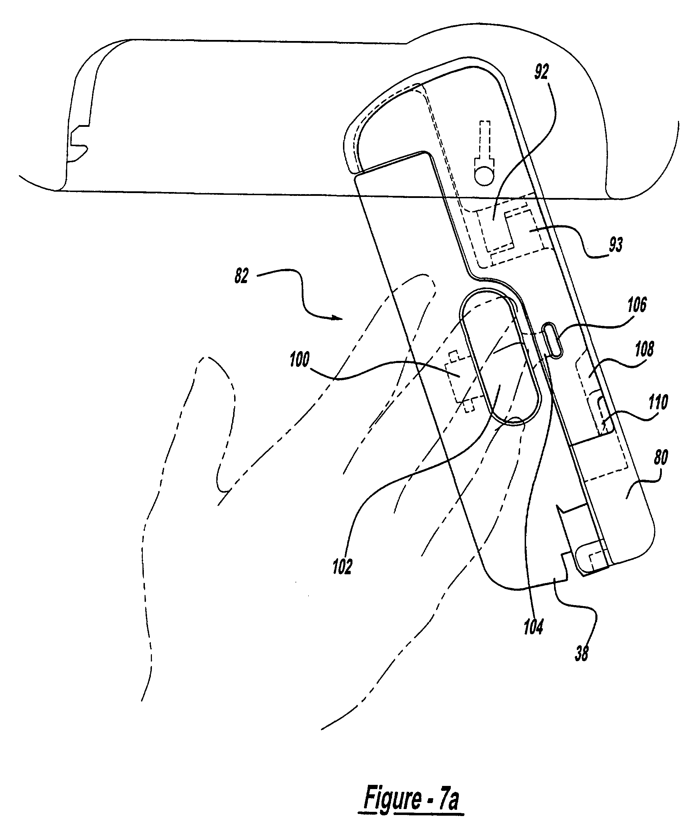

The screen console 38 in this embodiment also includes an auxiliary power connector 90. Again, one of ordinary skill in the art will appreciate that this connector is operable to receive power from various types of remote sources including, but not limited to an alternating current power source (e.g. a conventionally known power outlet in a home), and a direct current power source (e.g. a automobile battery, a conventionally known battery, etc.). Additionally, a rechargeable battery can be integrated in the screen console 38 providing power to the video player unit 79 when the video player unit 79 is detached from the housing panel 80 and being used in a portable capacity. The rechargeable battery recharges using the vehicle's electric power supply when the video display unit 79 is attached to the housing panel 80. As can be seen in FIGURE 5, the housing panel 80 also includes a wiring harness connector 92 operable to engage a corresponding wire harness connector 93, as shown in FIGURES 7a-7c, positioned on a rear side of the screen console 38.

Although this embodiment is shown mounted to a headliner 50 of an automobile, it is within the scope of this disclosure that this video display system 30 could also be mounted to other interior components located within the automobile, including, but not limited to, seat backs, center consoles, etc.

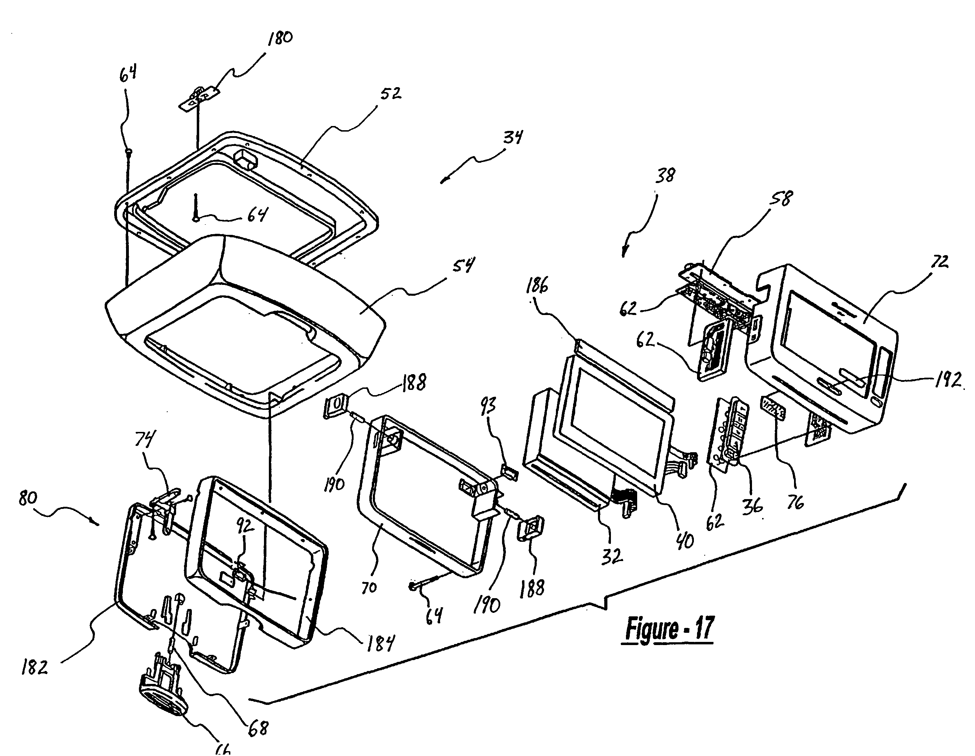

Referring to FIGURE 17, the components of the video display system 30 of the alternative preferred embodiment shown in FIGURES 4 and 5 are shown. The housing 34 includes a retainer portion 52 attached to a bezel portion 54 using threaded fasteners 64. The housing 34 is attached to an interior trim component of a vehicle using at least one attachment clip 180. Although threaded fasteners 64 are used in this embodiment, it is specifically contemplated and, therefore, within the scope of this disclosure, that the retainer portion 52 and the bezel portion 54 can be attached together through any conventionally known means including, but not limited to, other types of fasteners and attachment brackets molded into the retainer portion and/or the bezel portion 54.

The housing panel 80 includes a display carrier portion 182 and a display carrier trim portion 184 fastened to each other using the means previously described. The housing panel 80 is moveably associated with the housing 34. In this preferred embodiment, the housing panel 80 is rotatably or pivotally attached to the housing 34 through the use of a torque hinge 74. The torque hinge 74 provides a smooth, constant, and controlled rotation of the housing panel 80 from the first or closed position 44 to the second or open position 46 after the latch mechanism 42 is actuated by a user. One of ordinary skill in the art will appreciate that various types of hinge mechanisms can be used with equal results. In this embodiment, the first latch mechanism 42 including a latch portion 66 and a spring latch 68 is positioned substantially on the housing panel 80 and operatively associated with the bezel portion 54 of the housing 34 in order to retain the screen console 38 in a first or closed position 34.

The screen console 38 includes a screen 40 and a DVD player 32 positioned substantially within a front cover 72 and a rear cover 70. The DVD player 32 and the screen 40 are positioned parallel to one another, and as both are integrated into the single unit screen console 38, pivot or rotate through the same arc or motion as the housing panel 80 moves from the first or closed position 44 to the second or open position 46.

Additional components are also positioned substantially within the rear cover 70 and the front cover 72 of the screen console 38. All of the components in this embodiment are operatively associated with each other in order to allow the DVD player to function as intended. These components include a plurality of printed circuit boards 62 providing input and output interfaces with a plurality of controls 36, audio connectors 86, power connectors etc. A disc wiper assembly 58 and a screen inverter 186 are also provided within the screen console 38. In this embodiment, the infrared transmitter/receiver 76 and the infrared lens 192 are positioned on the front cover 72 while the second latch mechanism 82 and the wiring harness connector 93 are positioned on the rear cover 70. The second latch mechanism includes a latch portion 188 and a spring portion 190. The wiring harness connector 93 corresponds to a wiring harness connector 92 positioned substantially within the housing panel 80.

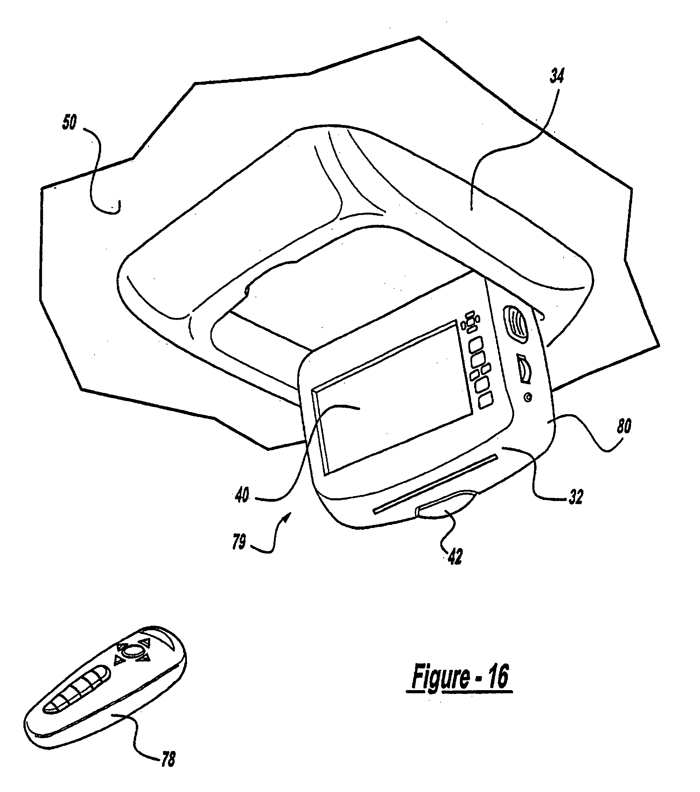

The alternative embodiment described in FIGURES 4, 5, and 17 may also be provided in a manner such that the screen console 38 is not removable from the housing panel 80, as shown in FIGURE 16. In this embodiment, the positioning of the components of the video display system 30 is substantially similar to the positioning of the components shown in FIGURE 17, the only difference being that the housing panel 80 and the screen console 38 are provided as a single unit without the screen console release feature described above.

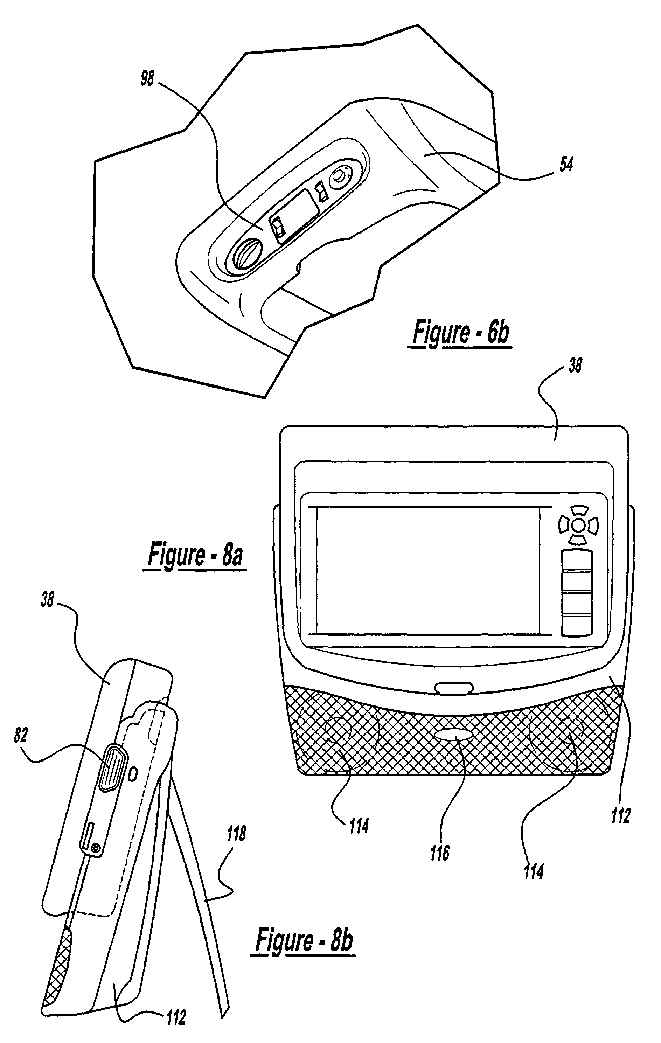

Referring to FIGURES 6a and 6b, a front portion 94 of the bezel portion 54 of the housing 34 may incorporate additional comfort features, including, but not limited to at least one interior lighting system 96 and at least one interior climate control system 98. Additionally, the front portion 94 of the bezel portion 54 may include the integration of a rear seat entertainment module 99 and/or other types of radio station selection control and volume control.

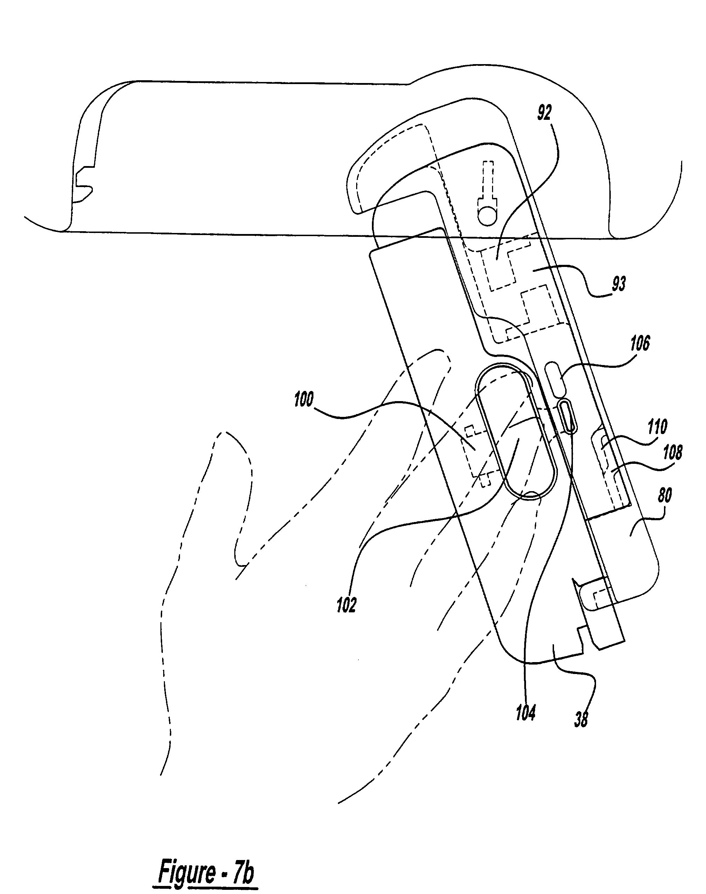

Referring to FIGURES 7a-7c, the second latch mechanism 82 will now be described in further detail. In FIGURE 7a, the latch mechanism 82 includes a latch arm 100 rotatably mounted to the screen console 38 and integrally formed with a button portion 102 and an engagement portion 104. The engagement portion 104 is operably associated with a detent 106 positioned in the housing panel 80. When pressure is applied to the button portion 102, the latch arm rotates removing the engagement portion 104 from the detent 106 releasing the second latch mechanism 82 from the housing panel 80. The second latch mechanism 82 also includes a retaining slot 108 integrally formed in the screen console 38. The retaining slot 108 is engageable with a corresponding retaining finger 110 integrally formed in the housing panel 80. When the engagement portion 104 of the latch arm 100 has been removed from the detent 106, the retaining slot 108 of the screen console 38 can be disengaged from the retaining finger 110, as shown in FIGURE 7b. This facilitates removal of the screen console 38 as shown in FIGURE 7c.

One of ordinary skill in the art will appreciate that several variations of this second latch mechanism 82 can be used with equal success. These include, but are not limited to, positioning the latch arm 100 horizontally with the engagement portion 104 engaging a detent 106 correspondingly positioned in the housing panel 80, and forming the second latch mechanism 82 with the latch arm 100, the button portion 102, and engagement portion 104 such that an angle is formed with respect to the positioning of the rotatably mounted latch arm 100 and the engagement portion 104.

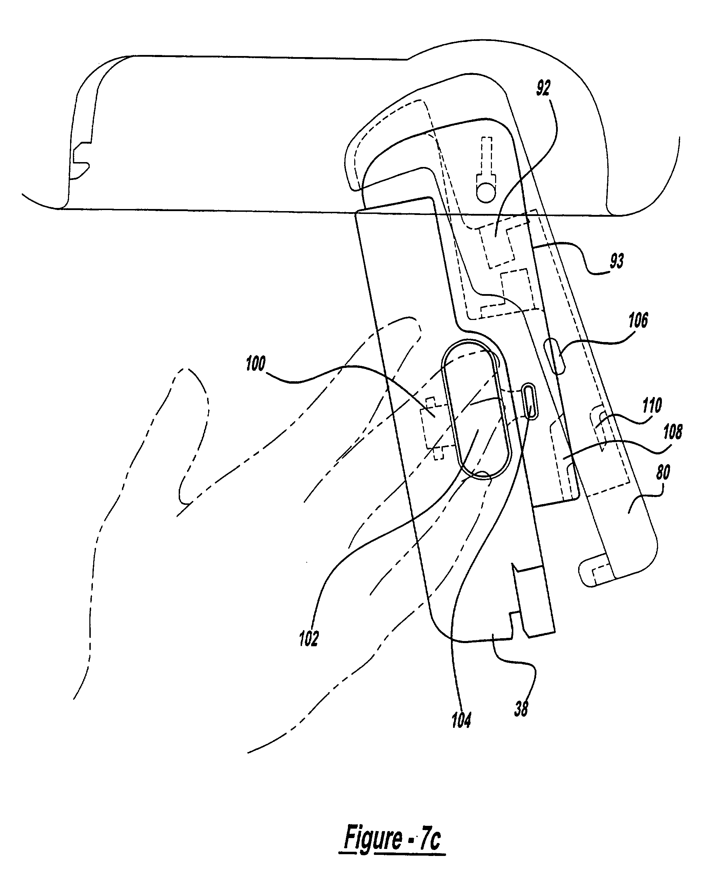

Referring to FIGURES 8a and 8b, a stand 112 is shown. The video display system 30 of the present invention can be removed from the housing 34 and operably positioned within the stand 112. The stand 112 may include at least one speaker 114 and a power switch 116. The video display system 30 is releasably retained using the second latch mechanism 82 in the same manner as described above. The stand 112 includes a rear leg 118 rotatably attached to the stand 112, thereby providing support so that the video display system can be substantially vertically positioned for viewing. The stand 112 has a wiring harness connector 92 engageable with a wiring harness connector 93 positioned in the screen console 38 as described above providing the required power, audio, etc., connections necessary for operation.

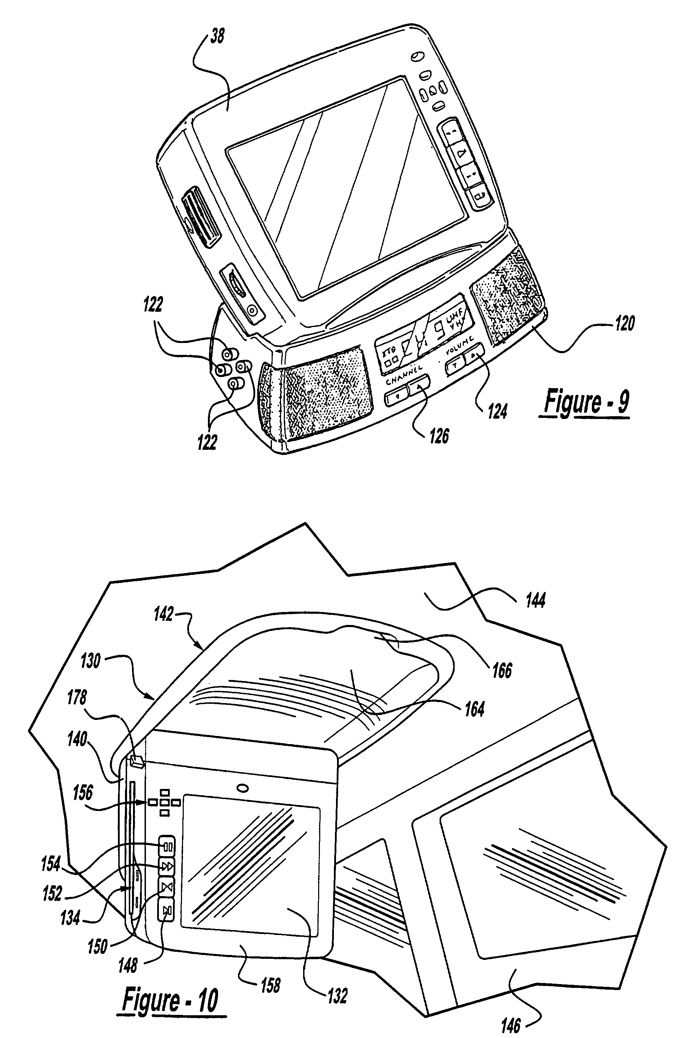

Referring to FIGURE 9, the screen console 38 can also be positioned on a tuner 120 and operated either as a DVD player or as a screen for conventionally known TV and cable TV. The tuner also includes connectors for cable, audio, video, and power hookups, shown generally at 122. Additionally, the tuner includes speakers and audio and channel controls shown at 124 and 126.

Referring to Figure 10, there is shown a video display system 130 in accordance with an alternative embodiment of the present invention. The video display system 130 comprises a liquid crystal display (LCD) screen 132 and a digital video disc (DVD) player 134 integrated in a single housing, referred to hereinafter as the LCD/DVD unit 136. The LCD/DVD unit 136 is removably coupled to a docking member 140, which is in turn pivotably connected to a console 142. The console 142 may be mounted in a number of different areas but in this example is mounted to a headliner 144 of a motor vehicle interior 146. It will be appreciated immediately, however, that the apparatus 130 could just as easily be mounted to a floor console of the vehicle or even on the back of one of the front seats of the vehicle. The apparatus 130 is not limited to automotive applications, and could easily be used within the cabin of a boat or aircraft if desired.

The LCD/DVD unit 136 includes a plurality of controls including a play switch 148, a rewind or search backward switch 150, a fast forward or search forward switch 152 and a pause or still switch 154. A menu control switch assembly 156 enables menu functions to be selected on the display 132.

The compactness of the LCD/DVD unit 136 allows the unit to be readily mounted in a wide variety of areas of a vehicle where a television incorporating a conventional cathode ray tube (CRT) and associated video cassette player would be much to bulky to mount. The entire apparatus 130 is also much lighter in weight, making to easier to secure in overhead areas of a vehicle interior, where a CRT might require significant modifications to the vehicle interior to support the greater weight of a CRT and video cassette player combination.

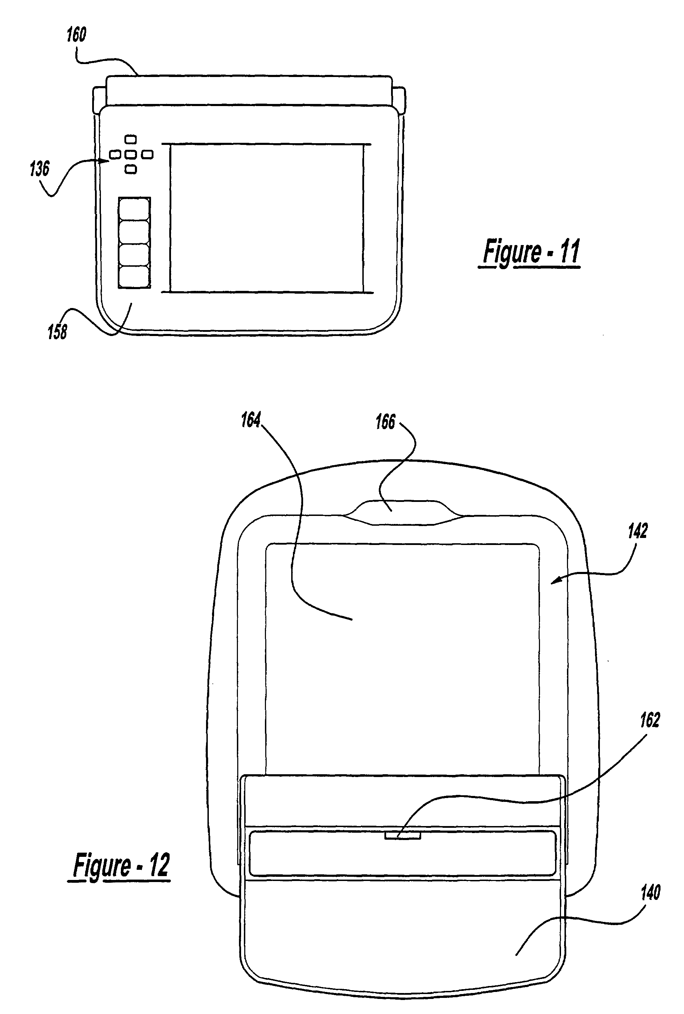

With further reference to Figures 10 and 11, the LCD/DVD unit 136 includes a molded plastic housing 158. An upper portion 160 of the housing 158 includes an electrical connector (not shown) for coupling with a mating connector 162, shown in Figure 12, disposed within the docking member 140. The connectors enable power to be provided to the LCD/DVD unit 136. Connectors suitable for this purpose are of the "drawer" type and are commercially available from a wide variety of manufacturers, such as the AMP Corporation.

With further reference to Figure 10, the console 142 includes a cavity or recess 164 sufficiently deep to hold the LCD/DVD unit 136 therein. A scalloped portion 166 provides an access point where an individual can insert one or more fingers and pull the LCD/DVD unit 136 down into the position shown in Figure 10.

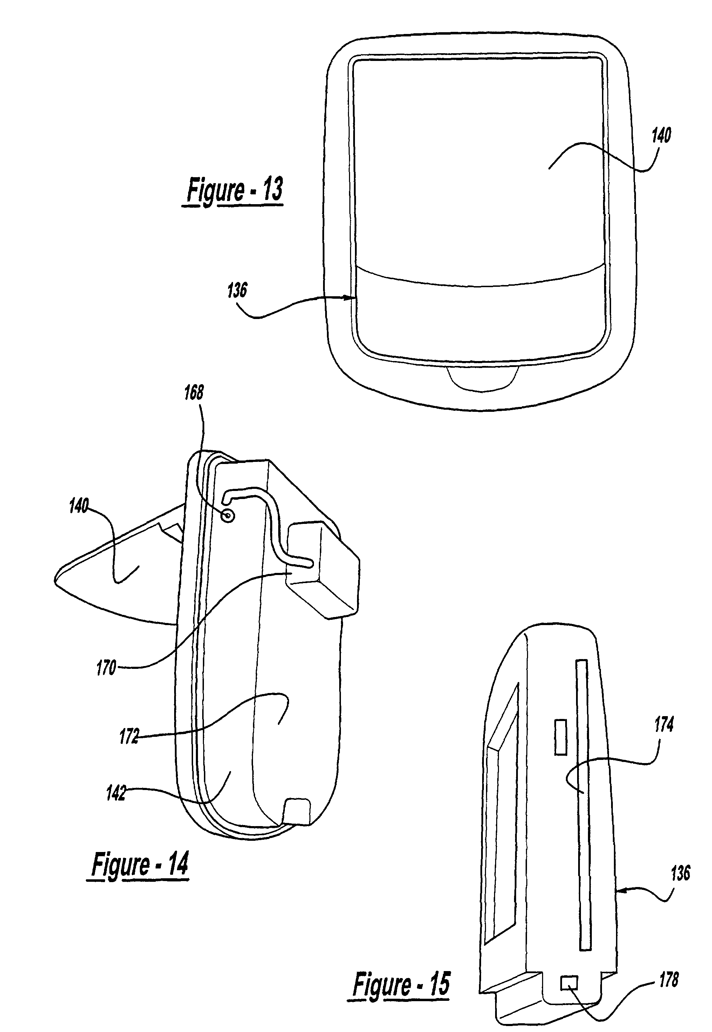

Referring to Figures 10 and 14, the docking member 140 is pivotably mounted to the console 142 at point 168 (Figure 15) on opposite sides of the console 142. The LCD/DVD unit 136 can be held in the closed position by any form of spring biased latch which engages within a recess or notch on the docking member 140 to hold the unit 136 up in the recess 164 once the docking member is urged into the closed position. Figure 5 also illustrates a power supply 170 for providing power to the LCD/DVD unit 136. The power supply 170 is shown attached to a rear surface 172 of the console 142, although it will be appreciated that this could just as easily be enclosed within a portion of the console 142. Figure 6 illustrates a slot 174 of the DVD player 176 which receives digital video discs for playback in the LCD/DVD unit 136.

With further reference to Figure 10, a spring loaded latch 178 is positioned on opposite sides of the housing 158 near the upper end 160 thereof. The latches permit the LCD/DVD unit 136 to be quickly detached from the docking member 140 when it is desired to remove the unit 136 from the vehicle. In this manner, the LCD/DVD unit 136 can be used outside the vehicle provided a suitable AC or DC power source is available.

The apparatus 130 of the present invention thus provides a compact means for playing back and viewing digital video discs. The light weight and compact configuration of the apparatus 130 enables it to be mounted at a variety of areas within a vehicle where it would be impossible or impractical to mount a television having a CRT and an associated videocassette player. The apparatus 130 is quickly and easily removable and light enough to be easily carried about and used outside of the vehicle within which its console is mounted. For example, the apparatus 130 may be removed from the vehicle and placed in another docking station which is located externally of the vehicle. In addition, the apparatus 10 may include other features such as a television tuner and/or a cable adapter to enable television programs to be used.

While the above-described embodiments disclose using a liquid crystal display for the screen 40, it is specifically contemplated and, therefore, within the scope of this disclosure that other types of screens could be used with equal results, including, but not limited to, filled emission displays, organic light emitting diode displays, poly light emitting diode displays, etc.

The foregoing discussion discloses and describes a preferred embodiment of the present invention. One skilled in the art will readily recognize from such discussion, and from the accompanying drawings and claims, that various changes, modifications, and variations can be made therein without departure from the scope of the invention as defined in the following claims.

## Claims

1. A video display system adaptable for use in a vehicle, comprising:
a housing (34) attached to an interior portion of the vehicle;
the display system being **characterised in that** it further includes:
a video player unit (79) in the form of a digital video disc player (32) and a screen (40) integrated in a screen console (38) removably attachable to the housing (34) for use in a vehicle or at a spaced apart location, the video player unit (79) being capable of pivoting between a closed position (44) and an open position (46) when attached to the housing (34); and
a power connector (92) operatively coupled to the video player unit (79) and adapted to interchangeably interface with one or more power sources.

2. The video display system of Claim 1, further comprising a housing panel (80) pivotally attached to the housing (34).

3. The video display system of Claim 2, wherein the video player unit (79) is removably attached to the housing panel (80) by a second latch mechanism (82, 178).

4. The video display system of Claim 3, wherein the second latch mechanism (82) includes a button portion (102) on the video player unit (79) cooperative with a detent (106) in the housing panel (80) for releasably securing the video player unit (79) to the housing panel (80).

5. The video display system of Claim 4, wherein the housing panel (80) is pivotally attached to the housing (34) by a torque hinge (74).

6. The video display system of Claim 1 wherein the video player unit (79) includes a liquid crystal display screen (40).

7. The video display system of Claim 1 further comprising a first latch mechanism (42) to releasably retain the video player unit (79) in the closed position (44) when the video player unit (79) is attached to the housing (34).

8. The video display system of Claim 1 wherein a the video player unit (79) includes an infrared receiver (76) operable to receive control signals from a remote control device (78).

9. The video display system of Claim 8 wherein the video player unit (79) includes an infrared transmitter (76) operable to send audio signals to remote locations.

10. The video display system of Claim 1 wherein the video player unit (79) includes a plurality of controls (36) to operate the video player unit.

11. The video display system of Claim 1 wherein the power source is a rechargeable battery.

12. The video display system of Claim 1 wherein the power source is the vehicle's electric power supply.

13. The video display system of Claim 1 wherein the housing (34) is attached to a headliner within the vehicle.

14. The video display system of Claim 1 further comprising a stand (112), wherein the video player unit (79) may be operatively positioned on the stand (112) for use when the player unit (79) is removed from the housing (34).

15. The video display system of Claim 14 wherein the stand (112) includes at least one speaker (114) and a plurality of controls (116) for operating the video player unit (79).

16. The video display system of Claim 1 further comprising a tuner (120), wherein the video player unit (79) may be operatively positioned on the tuner (120) for use when the video player unit (79) is removed from the housing (34).

17. The video display system of Claim 17 wherein the tuner (120) includes at least one speaker and a plurality of controls (124, 126) for operating the video player unit (79).

18. The video display system of claim 1 wherein said housing (34) further comprises
a housing panel (80) movably connected to said housing (34),
the screen console (38) being releasably attached to said housing panel (80); and
a second latch mechanism (82) operable to releasably retain said screen console (38) to said housing panel (80), said second latch mechanism (82) including a latch arm (100), at least one retaining finger (110), and at least one retaining slot (108), said latch arm (100) having a button portion (102) and an engagement portion (104), said button portion (102) being pivotally attached to screen console (38) and said engagement portion (104) being operably engageable with said housing panel (80) as said engagement portion pivots about said button portion (102), said at least one retaining finger (110) being engageable with said at least one retaining slot (108), one of said at least one retaining finger (110) and said at least one retaining slot (108) being formd on said housing panel (80) and one of said at least one retaining finger (110) and said at least one retaining slot (108) being formed on said screen console (38).

## Patentansprüche

1. Videoanzeigesystem, das für den Gebrauch in einem Fahrzeug angepasst werden kann, mit Folgendem:
einem Gehäuse (34), das an einem inneren Teil des Fahrzeugs angebracht ist,
wobei das Anzeigesystem **dadurch gekennzeichnet ist, dass** es weiterhin Folgendes umfasst:
eine Videoabspieleinheit (79) in der Form eines digitalen Videoplattenspielers (32) und eines in eine Bildschirmkonsole (38) integrierten Bildschirms (40), die entfernbar an dem Gehäuse (34) angebracht werden können, zum Einsatz in einem Fahrzeug oder an einem abgesetzten Ort, wobei die Videoabspieleinheit (79) zwischen einer geschlossenen Position (44) und einer offenen Position (46) schwenken kann, wenn sie am Gehäuse (34) angebracht ist, und
einen Energieversorgungsstecker (92), der betriebsmäßig an die Videoabspieleinheit (79) gekoppelt ist und austauschbar an eine oder mehrere Energiequellen angekoppelt werden kann.

2. Videoanzeigesystem nach Anspruch 1, weiterhin mit einer Gehäusetafel (80), die schwenkbar am Gehäuse (34) angebracht ist.

3. Videoanzeigesystem nach Anspruch 2, bei dem die Videoabspieleinheit (79) über einen zweiten Einschnappmechanismus (82, 178) entfernbar an der Gehäusetafel (80) angebracht ist.

4. Videoanzeigesystem nach Anspruch 3, bei dem der zweite Einschnappmechanismus (82) einen Knopfabschnitt (102) an der Videoabspieleinheit (79) umfasst, der mit einer Arretierung (106) in der Gehäusetafel (80) zusammenwirkt, um die Videoabspieleinheit (79) lösbar an der Gehäusetafel (80) zu befestigen.

5. Videoanzeigesystem nach Anspruch 4, bei dem die Gehäusetafel (80) über ein Kraftscharnier (74) schwenkbar am Gehäuse (34) angebracht ist.

6. Videoanzeigesystem nach Anspruch 1, bei dem die Videoabspieleinheit (79) einen Flüssigkristallanzeigebildschirm (40) umfasst.

7. Videoanzeigesystem nach Anspruch 1, weiterhin mit einem ersten Einschnappmechanismus (42) zum lösbaren Halten der Videoabspieleinheit (79) in der geschlossenen Position (44), wenn die Videoabspieleinheit (79) am Gehäuse (34) angebracht ist.

8. Videoanzeigesystem nach Anspruch 1, bei dem die Videoabspieleinheit (79) einen Infrarotempfänger (76) umfasst, der Steuersignale von einer Fernsteuerungsvorrichtung (78) empfangen kann.

9. Videoanzeigesystem nach Anspruch 8, bei dem die Videoabspieleinheit (79) einen Infrarotsender (76) umfasst, der Audiosignale an abgesetzte Orte senden kann.

10. Videoanzeigesystem nach Anspruch 1, bei dem die Videoabspieleinheit (79) mehrere Steuerungen (36) zur Betätigung der Videoabspieleinheit umfasst.

11. Videoanzeigesystem nach Anspruch 1, bei dem die Energiequelle eine aufladbare Batterie ist.

12. Videoanzeigesystem nach Anspruch 1, bei dem die Energiequelle die Stromversorgung des Fahrzeugs ist.

13. Videoanzeigesystem nach Anspruch 1, bei dem das Gehäuse (34) an einer Kopfleiste im Fahrzeug angebracht ist.

14. Videoanzeigesystem nach Anspruch 1, weiterhin mit einem Ständer (112), wobei die Videoabspieleinheit (79) betriebsmäßig auf dem Ständer (112) für den Gebrauch positioniert sein kann, wenn die Abspieleinheit (79) aus dem Gehäuse (34) entfernt wird.

15. Videoanzeigesystem nach Anspruch 14, bei dem der Ständer (112) mindestens einen Lautsprecher (114) und mehrere Steuerungen (116) zum Betätigen der Videoabspieleinheit (79) umfasst.

16. Videoanzeigesystem nach Anspruch 1, weiterhin mit einem Tuner (120), wobei die Videoabspieleinheit (79) betriebsmäßig auf dem Tuner (120) für den Gebrauch positioniert sein kann, wenn die Videoabspieleinheit(79) aus dem Gehäuse (34) entfernt wird.

17. Videoanzeigesystem nach Anspruch 16, bei dem der Tuner (120) mindestens einen Lautsprecher und mehrere Steuerungen (124, 126) zum Betätigen der Videoabspieleinheit (79) umfasst.

18. Videoanzeigesystem nach Anspruch 1, bei dem das Gehäuse (34) weiterhin Folgendes umfasst:
eine Gehäusetafel (80), die beweglich mit dem Gehäuse (34) verbunden ist,
wobei die Bildschirmkonsole (38) lösbar an der Gehäusetafel (80) angebracht ist, und
einen zweiten Einschnappmechanismus (82), der zum lösbaren Halten der Bildschirmkonsole (38) an der Gehäusetafel (80) betätigt werden kann, wobei der zweite Einschnappmechanismus (82) einen Einschnappklinkenarm (100), mindestens einen Haltefinger (110) und mindestens einen Halteschlitz (108) umfasst, wobei der Einschnappklinkenarm (100) einen Knopfabschnitt (102) und einen Eingriffsabschnitt (104) aufweist, wobei der Knopfabschnitt (102) schwenkbar an der Bildschirmkonsole (38) angebracht ist und der Eingriffsabschnitt (104) betätigbar mit der Gehäusetafel (80) in Eingriff kommen kann, wenn der Eingriffsabschnitt um den Knopfabschnitt (102) schwenkt, wobei der mindestens eine Haltefinger (110) mit dem mindestens einen Halteschlitz (108) in Eingriff gebracht werden kann, wobei entweder der mindestens eine Haltefinger (110) oder der mindestens eine Halteschlitz (108) an der Gehäusetafel (80) ausgebildet ist und entweder der mindestens eine Haltefinger (110) oder der mindestens eine Halteschlitz (108) an der Bildschirmkonsole (38) ausgebildet ist.

## Revendications

1. Système d'affichage vidéo pour une utilisation dans un véhicule, comprenant :
un boîtier (34) fixé sur une partie interne du véhicule;
le système d'affichage étant **caractérisé en ce qu'**il inclut également :
un lecteur vidéo (79) sous forme d'un écran (40) de lecteur de vidéodisque numérique (32) intégré à une console d'écran (38), qui peut se détacher du boîtier (34) pour une utilisation dans un véhicule ou dans un autre endroit, le lecteur vidéo (79) pouvant pivoter entre une position fermée (44) et une position ouverte (46) lorsqu'il est fixé au boîtier (34); et
un connecteur d'alimentation (92)couplé de manière fonctionnelle au lecteur vidéo (79) et adapté pour assurer la liaison avec une ou plusieurs source(s) d'alimentation.

2. Système d'affichage vidéo selon la revendication 1, comprenant en outre un panneau de boîtier (80) fixé de manière pivotante au boîtier (34).

3. Système d'affichage vidéo selon la revendication 2, dans lequel le lecteur vidéo (79) peut être attaché de manière amovible au panneau du boîtier (80) par un second mécanisme de verrouillage (82, 178).

4. Système d'affichage vidéo selon la revendication 3, dans lequel le second mécanisme de verrouillage (82) inclut une partie bouton (102) sur le lecteur vidéo (79) coopérant avec un encliquetage (106) sur le panneau de boîtier (80), pour fixer de manière séparable le lecteur vidéo (79) au panneau de boîtier (80).

5. Système d'affichage vidéo selon la revendication 4, dans lequel le panneau du boîtier (80) est fixé de manière pivotante au boîtier (34) à l'aide d'une charnière de force (74).

6. Système d'affichage vidéo selon la revendication 1, dans lequel le lecteur vidéo (79) inclut un écran à cristaux liquides (40).

7. Système d'affichage vidéo selon la revendication 1, comprenant en outre un premier mécanisme de verrouillage (42) pour retenir de manière séparable le lecteur vidéo (79) en position fermée (44) lorsque le lecteur vidéo (79) est fixé au boîtier (34).

8. Système d'affichage vidéo selon la revendication 1, dans lequel le lecteur vidéo (79) inclut un récepteur à infrarouge (76) pouvant recevoir des signaux de commande d'un dispositif de commande à distance (78).

9. Système d'affichage vidéo selon la revendication 8, dans lequel le lecteur vidéo (79) inclut un émetteur à infrarouge (76) pouvant envoyer des signaux audio vers des sites distants.

10. Système d'affichage vidéo selon la revendication 1, dans lequel le lecteur vidéo (79) inclut une pluralité de commandes (36) pour utiliser le lecteur vidéo.

11. Système d'affichage vidéo selon la revendication 1, dans lequel la source d'alimentation est une pile rechargeable.

12. Système d'affichage vidéo selon la revendication 1, dans lequel la source d'alimentation est l'alimentation électrique du véhicule.

13. Système d'affichage vidéo selon la revendication 1, dans lequel le boîtier (34) est fixé à une moulure de tête à l'intérieur du véhicule.

14. Système d'affichage vidéo selon la revendication 1, comprenant en outre un support (112), dans lequel le lecteur vidéo (79) peut être positionné de manière opérationnelle sur ledit support (112) pour une utilisation lorsque le lecteur vidéo (79) est retiré du boîtier (34).

15. Système d'affichage vidéo selon la revendication 14, dans lequel le support (112) inclut au moins un haut-parleur (114) et une pluralité de commandes (116) permettant d'utiliser le lecteur vidéo (79).

16. Système d'affichage vidéo selon la revendication 1, comprenant en outre un syntoniseur (120), dans lequel le lecteur vidéo (79) peut être positionné de manière opérationnelle sur le syntoniseur (120) pour une utilisation lorsque le lecteur vidéo (79) est retiré du boîtier (34).

17. Système d'affichage vidéo selon la revendication 16, dans lequel le syntoniseur (120) inclut au moins un haut-parleur et une pluralité de commandes (124, 126) permettant d'utiliser le lecteur vidéo (79).

18. Système d'affichage vidéo selon la revendication 1, dans lequel ledit boîtier (34) comprend en outre un panneau de boîtier (80) raccordé de manière amovible au dit boîtier (34), la console d'écran (38) étant fixée de manière séparable audit panneau de boîtier (80); et un second mécanisme de verrouillage (82) pouvant maintenir de manière séparable ladite console d'écran (38) sur ledit panneau de boîtier (80), ledit mécanisme de verrouillage (82) incluant un levier de verrouillage (100), au moins un doigt de retenue (110), et au moins une fente de retenue (108), ledit levier de verrouillage (100) comportant une partie bouton (102) et une partie d'engagement (104), ladite partie bouton (102) étant fixée de manière pivotante à la console d'écran (38), et ladite partie d'engagement (104) s'engageant de manière opérationnelle dans ledit panneau de boîtier (80) étant donné que la partie d'engagement pivote autour de ladite partie bouton (102), ledit au moins un doigt de retenue (110) pouvant s'engager dans ladite au moins une fente de retenue (108), un parmi ledit au moins un doigt de retenue (110) et ladite au moins une fente de retenue (108) étant formé sur ledit panneau de boîtier (80) et un parmi ledit au moins un doigt de retenue (110) et ladite au moins une fente de retenue (108) étant formé sur ladite console d'écran (38).
